# EUROPÄISCHE PATENTSCHRIFT

(11) **EP 0 569 053 B1**
(45) Veröffentlichungstag und Bekanntmachung des Hinweises auf die Patenterteilung: **24.05.1995**
(21) Anmeldenummer: 93111084.5
(22) Anmeldetag: 22.12.1990
(51) Int. Cl.: G05G 5/08, B60K 41/26

(54) **Kraftfahrzeug, insbesondere Kleinschlepper, mit einer in einer Parkstellung feststellbaren Bremse**
Motor vehicle, particularly small tractor, with brake that can be blocked in a park position
Véhicule automobile, particulièrement petit tracteur, avec frein immobilisable à une position de stationnement

(30) Priorität: 26.01.1990 US 471294
(43) Veröffentlichungstag der Anmeldung: 10.11.1993
(62) Teilanmeldung aus: 90125357.5
(73) Patentinhaber: DEERE & COMPANY, Moline, Illinois 61265 (US)
(72) Erfinder: Hoch, John Joseph, Columbus, Wisconsin 53925 (US)
(74) Vertreter: Feldmann, Bernhard

(56) Entgegenhaltungen:
- DE-A- 1 916 995
- US-A- 4 211 314
- US-A- 4 301 901
- US-A- 4 620 575
- US-A- 4 759 417

## Beschreibung

Die Erfindung bezieht sich auf ein Kraftfahrzeug, insbesondere Kleinschlepper, mit einer Bremse, deren Gestänge zur Verstellung ein erstes Bedienungselement aufweist und in einer Parkstellung feststellbar ist, und einem mindestens ein Laufrad antreibbaren Endgetriebe, dessen Ausgangsdrehzahl bei einer Verstellung eines zweiten an Beschleunigungsteile angeschlossenen Bedienungselementes von Null auf eine Maximaldrehzahl variierbar ist, wobei bei in der Parkstellung festgestellter Bremse das Endgetriebe die Drehzahl Null aufweist.

Bei diesem Kraftfahrzeug (US-A-4 759 417) wird die Ausgangsdrehzahl des Endgetriebes über ein Eingangsglied verstellt, das über ein Gestänge mit einer Klinke in seiner Stellung für die Ausgangsdrehzahl Null festgesetzt werden kann, wenn die Parkbremse eingelegt ist. Auch bei eingelegter Parksperre ist nicht auszuschließen, daß die Beschleunigungsteile betätigt werden, was zu Beschädigungen der entsprechenden Gestängeteile führen kann. Das die Klinke aufweisende Gestänge wird über einen Handhebel, der zum Festsetzen des Bremsgestänges in der Parkstellung dient, verstellt und benötigt einen entsprechenden Freiraum, der bei derartigen in der Regel klein bauenden Fahrzeugen schwer zu schaffen ist. Im übrigen ist dieser bekannte Aufbau teileaufwendig und damit zu teuer.

Bei einem anderen bekannten Kraftfahrzeug (GB-A-2 180 018) wird das Endgetriebe über einen Riementrieb angetrieben, der eine verschwenkbare Spannrolle aufweist, über die der Antrieb ausschaltbar ist. Die Spannrolle wird über ein auch zum Bremsen dienendes Pedal verschwenkt, das über einen Handhebel in seiner Bremsstellung festsetzbar ist. Zum Ändern der Fahrgeschwindigkeit dient eine über Pedale verschwenkbare Doppelriemenscheibe mit veränderlichem Durchmesser, die unabhängig von der Stellung des auch zum Bremsen dienenden Pedals verstellbar ist.

Schließlich ist es auch nicht mehr neu (US-A-2 657 778), bei einem Fahrzeug, das keine Parkbremse aufweist, einem Gaspedal und einem Bremspedal einen Kipphebel zuzuordnen, der bei einem Betätigen des Bremspedals das Gaspedal entsprechend zurückstellt.

Für einen Mähdrescher ist bereits vorgeschlagen worden (DE-A-1 916 995), ein Pedal für eine Betriebs- bzw. Feststellbremse mit einem Handhebel, über den eine den Ölstrom für den Antrieb von Ölmotoren liefernde hydrostatische Verstellpumpe regelbar ist, derart zu kuppeln, daß die Verstellpumpe auf Nullförderung zurückgestellt wird, sobald das Bremspedal niedergetreten wird. Dies kann aber nur erfolgen, wenn der Handhebel bzw. eine an ihm angreifende Regelstange frei beweglich bleiben, da die Regelstange bzw. der Handhebel über eine am Bremspedal angeflanschte Kurve in die Neutralstellung zurückgeführt werden sollen. Ist der Handhebel beispielsweise blockiert, so ist eine Bremsbetätigung ausgeschlossen. Desweiteren erweist sich bei dieser bekannten Einrichtung als Nachteil, daß eine Zugstange zur Betätigung der Betriebs- bzw. Feststellbremse über eine Wippe und mit Abstand dem Bremspedal derart beigeordnet ist, daß die Bremse erst zur Wirkung kommt, wenn die Verstellpumpe in eine Nullregelung zurückgeregelt worden ist. Notbremsungen können damit erst verzögert einsetzen. Bei festgelegter Feststellbremse ist allerdings ein Fahrbetrieb ausgeschlossen.

Die mit der Erfindung zu lösende Aufgabe wird in besonders einfachen Maßnahmen gesehen, die einen Fahrbetrieb bei eingelegter Parksperre ausschließen, die wenige zusätzliche Teile benötigen und die erforderliche Funktionssicherheit gewährleisten. Die Erfindung sieht deshalb einen zusammen mit dem Bremsgestänge verstellbaren Nocken und eine gegen den Nocken anliegende Stoppstange vor, die die Beschleunigungsteile in ihrer Stellung für die Ausgangsdrehzahl Null bei in der Parkstellung festgestelltem Bremsgestänge gegen eine Verstellung blockiert. Auf diese Weise lassen sich die Beschleunigungsteile nicht verstellen, wenn die Parkbremse eingelegt ist. Ein Fahrbetrieb ist dann nicht möglich.

Ein besonders einfaches Blockieren läßt sich durch einen zusammen mit den Beschleunigungsteilen verstellbaren Armteil erreichen, um den sich bei sich in ihrer Ausgangsdrehzahl Null befindlichen Beschleunigungsteilen und bei in der Parkstellung festgestelltem Bremsgestänge die Stoppstange legt. Hierbei kann die Stoppstange drehbar gelagert und mit einem gegenüber ihrer Drehachse abgesetzten Teil versehen sein, der unter der Wirkung einer Feder gegen den Nocken anliegt und bei in der Parkstellung festgestelltem Bremsgestänge den Armteil umgreift. Damit will die Stoppstange infolge der Feder in eine Stellung verschwenken, in der die Beschleunigungsteile daran gehindert sind, das Endgetriebe derart zu verstellen, daß es angetrieben wird. Andererseits wird die Stoppstange entgegen der Wirkung der Feder bei nicht betätigtem Bremsgestänge in eine Stellung verstellt, in der die Beschleunigungsteile bewegbar sind, um einen Fahrbetrieb zuzulassen. Bei diesen Vorgängen wird die Stoppstange immer durch den Nocken geführt, da sie auf dem Nocken aufliegt.

Bei dem eingangs genannten Kraftfahrzeug weist das Bremsgestänge ein Bremspedal und die Beschleunigungsteile weisen ein Beschleunigungspedal auf, das mit einer drehbar gelagerten Welle fest verbunden ist, die den mit dem Endgetriebe über ein Gestänge verbundenen Armteil aufweist, weshalb nach der Erfindung noch vorgeschlagen wird, daß der Nocken mit dem Bremspedal verbunden und mit diesem verschwenkbar ist, wobei das Bremspedal mit einem U-förmigen Teil versehen ist, der auf der Welle gelagert ist und dessen eines Ende den Nocken aufweist. Damit bestehen die zusätzlichen Teile nur aus einer relativ einfachen und platzsparend einzusetzenden Stoppstange und einem sich mit dem Bremspedal mitdrehenden Nocken. Die Stoppstange kann relativ leicht ausgebildet sein, wenn sie noch unter Federwirkung steht.

In der Zeichnung ist ein nachfolgend näher erläutertes Ausführungsbeispiel der Erfindung dargestellt. Es zeigt:
- Fig. 1: ein Kraftfahrzeug in Form eines selbstfahrenden Rasenmähers,
- Fig. 2: eine Feststelleinrichtung für eine Fußbremse oder eine Parkbremse im gelösten Zustand,
- Fig. 3: eine ähnliche Darstellung wie in Fig. 2, die Parkbremse jedoch in ihrem eingerückten Zustand darstellend,
- Fig. 4: das Endgetriebe des Rasenmähers in einer Stellung für Vorwärtsfahrt bei unbetätigten Pedalen für die Fahrzeugbeschleunigung und Fahrzeugbremse,
- Fig. 5: eine ähnliche Darstellung wie in Fig. 4, wobei eine Spannrolle jedoch eine Stellung einnimmt, als wäre das Pedal für die Fahrzeugbeschleunigung zumindest teilweise heruntergetreten,
- Fig. 6: das Endgetriebe des Rasenmähers in einer Stellung für Rückwärtsfahrt bei unbetätigtem Pedal für die Fahrzeugbremse und durchgetretenem Pedal für die Fahrzeugbeschleunigung,
- Fig. 7: die Pedale für die Fahrzeugbeschleunigung und Fahrzeugbremsung im unbetätigten Zustand und in Seitenansicht,
- Fig. 8: die Pedale nach Fig. 7 bei eingelegter Parkbremse,
- Fig. 9: das Pedal für die Fahrzeugbeschleunigung in ausgezogenen Linien und im unbetätigten Zustand und in unterbrochenen Linien im durchgetretenen Zustand und
- Fig. 10: eine Arretierungsvorrichtung für das Pedal für die Fahrzeugbeschleunigung in Draufsicht.

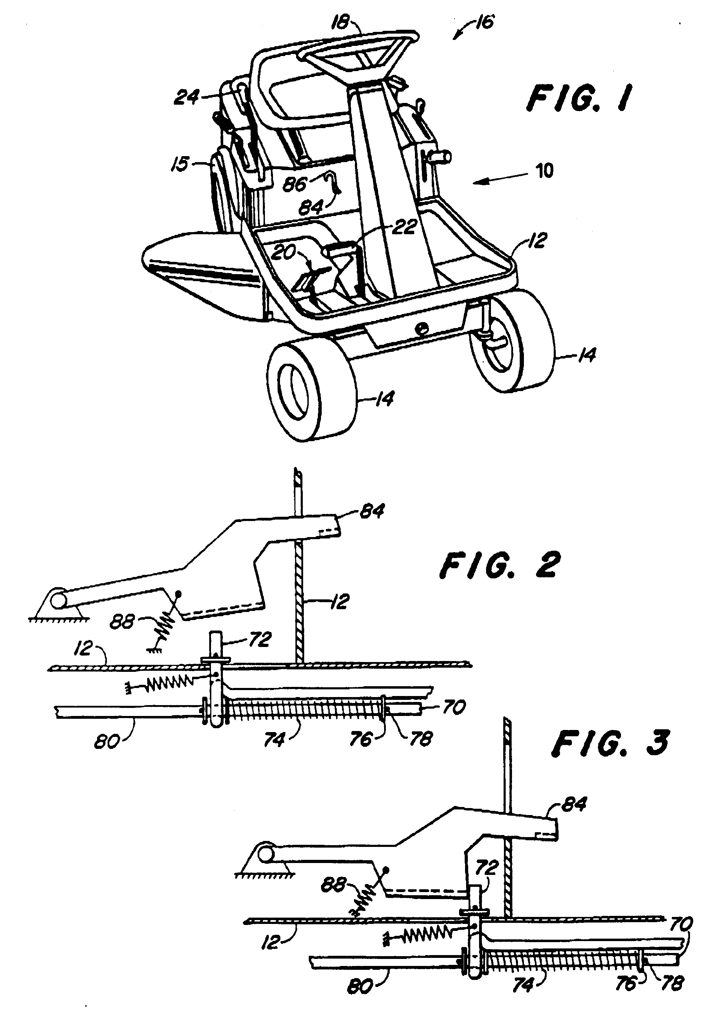

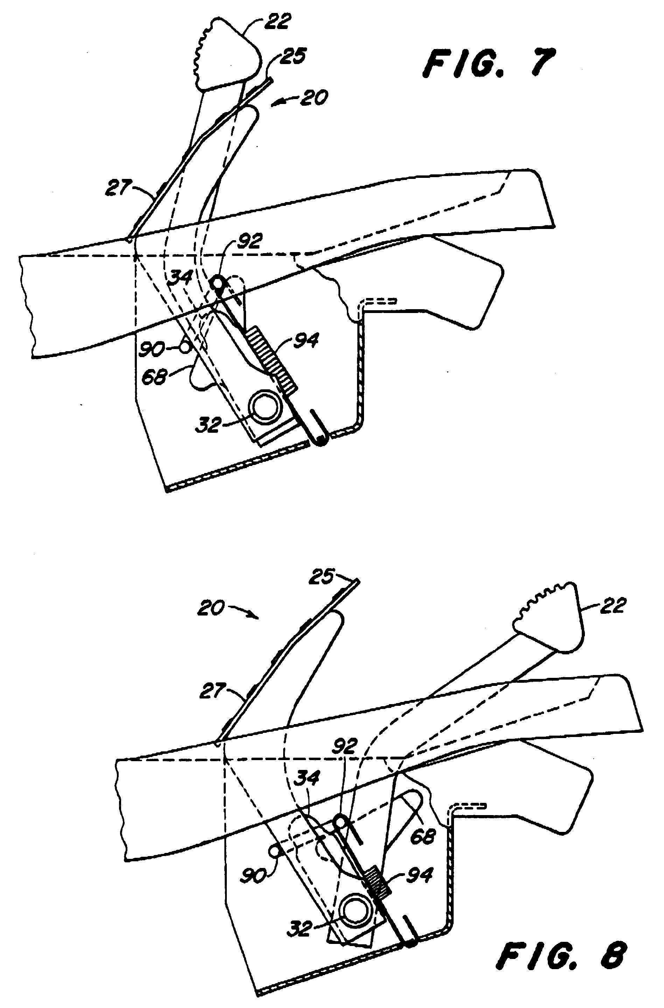

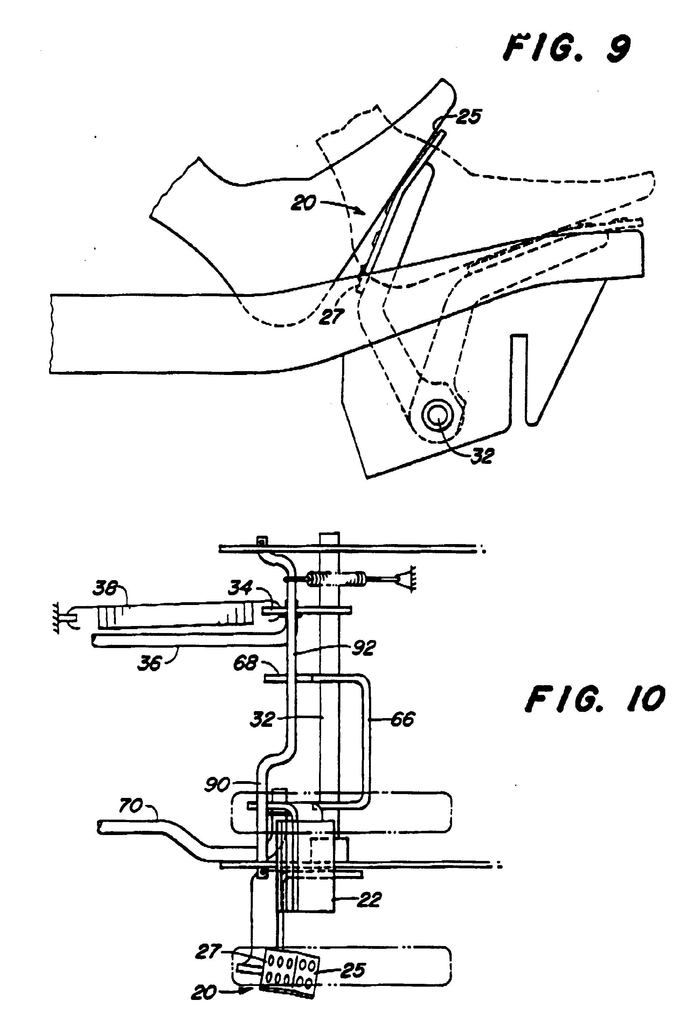

In Fig. 1 der Zeichnung ist ein Kraftfahrzeug 10 in Form eines selbstfahrenden Rasenmähers dargestellt. Es ist mit einem Rahmen 12, Laufrädern 14 und 15 und einem Bedienungsstand 16 versehen. Letzterer weist ein Lenkrad 18, ein Pedal 20 für die Fahrzeugbeschleunigung, ein Pedal 22 für die Fahrzeugbremsung und einen von Hand betätigbaren Schalthebel 24 für die Fahrtrichtungsumkehr auf. Aus den Fig. 7, 8 und 9 ist ferner noch zu entnehmen, daß das Pedal 20 eine obere Pedalfläche 25 hat, die in einem Winkel zu einer rückwärtigen Pedalfläche 27 angeordnet ist. Der Rahmen 12 nimmt eine nicht dargestellte Kraftquelle, wie einen Verbrennungs- oder Elektromotor, auf, und die Kraft wird von dort zu den antreibbaren rückwärtigen Laufrädern 15 über ein Zugmittelgetriebe, wie es in dem Dokument US-A-4 771 856 beschrieben ist und auf das dieserhalb ausdrücklich Bezug genommen wird, und ein Endgetriebe 44 oder dergleichen übertragen.

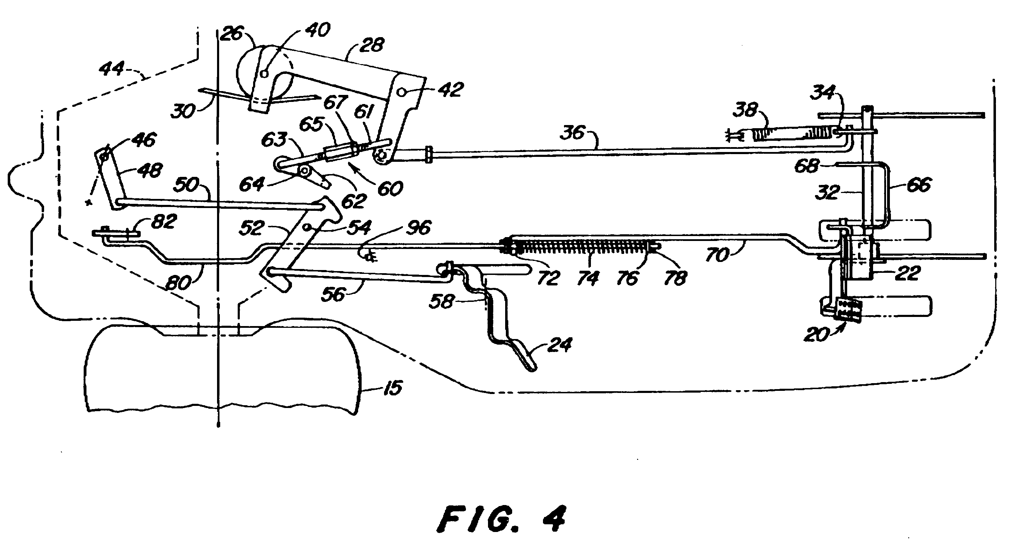

Zum Einstellen der Fahrzeuggeschwindigkeit oder zum Beschleunigen dient eine aus den Fig. 4, 5 und 6 erkennbare Zugmittelscheibe 26 in Form einer Spannrolle über ein Zugmittel 30 des ansonsten nicht weiter dargestellten Zugmittelgetriebes. Die Zugmittelscheibe 26 ist hierzu über einen Arm 28 schwenkbar gelagert, so daß bei einem Verschwenken des Armes das Zugmittel 30, das als Riemen dargestellt ist, mehr oder weniger gespannt wird, wodurch die wirksamen Durchmesser einer nicht gezeigten doppelten Zugmittelscheibe verändert werden. Die Schwenkbewegung der Zugmittelscheibe 26 wird durch das Heruntertreten des Pedals 20 ausgelöst.

Das Pedal 20 ist rechts neben dem Lenkrad 18 auf dem Bedienungsstand 16 vorgesehen und mit einer drehbar gelagerten Welle 32 fest verbunden, an der ein Armteil 34 fest angeordnet ist. An den Armteil 34 ist eine Stange 36 schwenkbar angeschlossen, und der Armteil 34 wird über eine Feder 38, die anderenends an dem Rahmen 12 angreift, mit Bezug auf Fig. 4 nach rückwärts in eine Position gezogen, in der das Pedal 20 seine Ausgangsstellung einnimmt und die Zugmittelscheibe 26 das Zugmittel 30 in einem ungespannten Zustand hält. Die Stange 36 erstreckt sich nach rückwärts und ist schwenkbar an den Arm 28 angeschlossen. Dieser nimmt die Zugmittelscheibe 26 über eine Welle 40 auf und ist seinerseits am Rahmen 12 über eine Welle 42 schwenkbar gelagert.

Das Endgetriebe 44 ist zwischen den rückwärtigen Laufrädern 15 angeordnet und mit einer Schaltwelle 46 versehen, die je nach ihrer Stellung das Endgetriebe in eine Drehrichtung für Vorwärts- oder Rückwärtsfahrt schaltet. Zum Verstellen der Schaltwelle 46 ist an diese ein Richtungsarm 48 drehfest angeschlossen, der an seinem anderen Ende das eine Ende einer ersten Schaltstange 50 schwenkbar aufnimmt, deren anderes Ende an einem Schwenkarm 52 angelenkt ist. Der Schwenkarm 52 ist am Rahmen 12 über eine Welle 54 gelagert, und sein anderes Ende greift an einer zweiten Schaltstange 56 an, die ihrerseits an den von Hand betätigbaren Schalthebel 24 angeschlossen ist. Der Schalthebel 24 ist am Rahmen 12 über einen Bolzen 58 verstellbar angeordnet.

An den Arm 28 ist noch eine Verbindungsstange 60 schwenkbar angeschlossen, die einen vorderen und einen rückwärtigen Stangenteil 61 und 63 aufweist, deren Enden mit gegenläufigen Gewinden versehen sind. Die Stangenteile 61 und 63 sind miteinander über einen Gewinde aufweisenden Stellteil 65 verbindbar, so daß durch entsprechendes Drehen des Stellteils 65 die wirksame Länge der Verbindungsstange 60 geändert werden kann, um Fertigungstoleranzen und Verschleiß am Zugmittel 30 ausgleichen zu können. Eine Gegenmutter 67 ist noch auf den frontseitigen Stangenteil 61 aufgeschraubt und liegt gegen den Stellteil 65 an, um eine Verstellung während des Einsatzes aufgrund von Erschütterungen zu verhindern. Die Verbindungsstange 60 ist nach rückwärts gerichtet und mit ihrem rückwärtigen Ende an eine Sperrklinke 62 angeschlossen, die an dem Rahmen 12 über einen Bolzen 64 schwenkbar angeschlossen ist.

Das Pedal 22 für die Fahrzeugbremsung ist ebenfalls rechts neben dem Lenkrad 18, aber links neben dem Pedal 20 für die Fahrzeugbeschleunigung vorgesehen. Das Pedal 22 erstreckt sich bodenwärts und bildet dort einen U-förmigen Teil 66, der drehbar auf der Welle 32 lagert. Ein Nocken 68 ist an das eine Ende des U-förmigen Teils 66 angeformt. Eine vordere Bremsstange 70 mit einem rückwärtigen, nach oben gerichteten Teil 72 ist schwenkbar an das Pedal 22 angeschlossen, und zwar oberhalb der Welle 32, und über eine Feder 74, Scheibe 76 und Stift 78 mit einer rückwärtigen Bremsstange 80 verbunden. Die Bremsstange 80 wiederum ist an einen Bremsarm 82 angeschlossen, dessen Stellung die Bremsung des Fahrzeuges kontrolliert. Ein Parkbremshebel 84 erstreckt sich vom Rahmen 12 nach außen durch einen umgekehrt J-förmig ausgebildeten Schlitz 86, wie es aus Fig. 1 zu ersehen ist. Der Parkbremshebel 84 ist schwenkbar am Rahmen 12 (Fig. 2 und 3) angeordnet und steht unter der Wirkung einer Feder 88, die anderenends am Rahmen 12 angreift und den Parkbremshebel 84 nach unten ziehen will.

Eine in den Fig. 7, 8 und 10 erkennbare Stoppstange 90 ist hinter der Welle 32, jedoch auf einem höheren Niveau, in dem Rahmen 12 gelagert. Sie ist mit einem Teil 92 versehen, der gegenüber der Drehachse der Stoppstange 90 abgesetzt ist und auf dem Nokken 68 reitet. Eine anderenends an den Rahmen 12 angeschlossene Feder 94 ist bestrebt, die Stoppstange 90 im Uhrzeigerdrehsinn zu verschwenken, insbesondere wenn das Pedal 22 heruntergetreten wird.

Im nachfolgenden wird auf die Wirkungsweise der vorliegenden Erfindung bzw. des vorstehend beschriebenen Ausführungsbeispiels eingegangen. Bei nicht betätigtem Pedal 20 ist das Zugmittel 30 ungespannt, und das Fahrzeug kann nicht angetrieben werden. Ein Antrieb kann erst erfolgen, wenn das Pedal 20 bei eingeschaltetem Motor betätigt wird. Um beispielsweise vorwärts fahren zu können, tritt die Bedienungsperson bei sich in seiner Stellung für Vorwärtsfahrt befindlichem Schalthebel 24 das Pedal 20 mit ihrem Fuß herunter. Das Pedal 20 schwenkt dabei nach vorne und dreht die Welle 32 im Uhrzeigerdrehsinn und gleichzeitig den Armteil 34, wobei die Feder 38 gespannt wird. Durch die Bewegung des Armteils 34 wird die Stange 36 nach vorne gezogen und der Arm 26 entgegen dem Uhrzeigerdrehsinn verschwenkt. Im gleichen Drehsinn verschwenkt dabei die mit dem Arm 28 verbundene Zugmittelscheibe 26, wodurch das Zugmittel 30 gespannt wird und die doppelseitige Zugmittelscheibe antreiben kann. Diese wiederum treibt das Endgetriebe 44 an. Wenn die Zugmittelscheibe 26 mit Bezug auf die Fig. 4 entgegen dem Uhrzeigerdrehsinn verschwenkt, wird die Verbindungsstange 60 nach vorne gezogen und die Sperrklinke 62 im Uhrzeigerdrehsinn aus ihrer Position in Fig. 4 verschwenkt. Die Sperrklinke 62 wird immer eine Position einnehmen, die der verschwenkten Stellung des Pedals 20 entspricht, und in diesen Stellungen die Bewegungen des Schwenkarms 52 derart blockieren, daß der Schalthebel 24 nicht aus seiner Stellung für Vorwärtsfahrt in seine Stellung für Rückwärtsfahrt oder umgekehrt verstellt werden kann, d. h. sobald das Pedal 20 aus seiner Ausgangsstellung verschwenkt wurde und in dieser Stellung verbleibt, ist ein Fahrtrichtungswechsel nicht möglich.

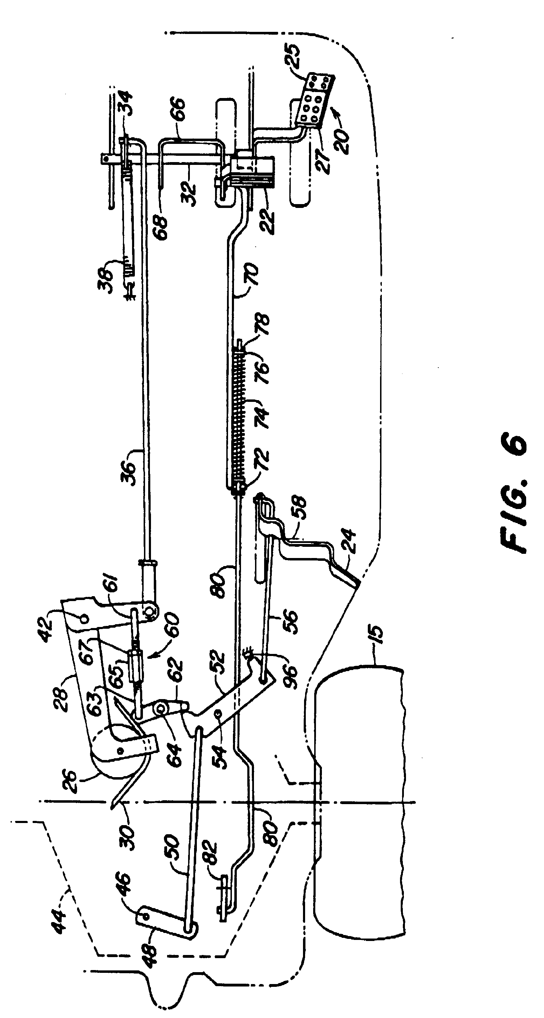

Erst wenn die Bedienungsperson das Pedal 20 freigibt und dieses in seine Ausgangsstellung unter der Wirkung der Feder 38 zurückkehren kann, kann der Schalthebel 24 aus seiner Stellung für Vorwärtsfahrt in seine Stellung für Rückwärtsfahrt oder umgekehrt verstellt werden. Um beispielsweise den Schalthebel 24 in seine Stellung für Rückwärtsfahrt zu verbringen, muß die Bedienungsperson den Schalthebel 24 nach rückwärts verstellen, wie es in Fig. 6 gezeigt ist. Bei diesem Vorgang wird die zweite Schaltstange 56 nach vorne und die erste Schaltstange 50 nach rückwärts verstellt. Der Schwenkarm 52 dreht dabei entgegen dem Uhrzeigerdrehsinn aus seiner Position in Fig. 4 in seine Stellung in Fig. 6 und verdreht gleichfalls den Richtungsarm 48 bzw. die Schaltwelle 46 im Uhrzeigerdrehsinn in seine bzw. ihre Schaltstellung für Rückwärtsfahrt. Danach muß die Bedienunsperson das Pedal 20 heruntertreten, um rückwärts fahren zu können. Sobald der Schwenkvorgang des Pedals 20 nach vorne im Uhrzeigerdrehsinn erfolgt, verschwenkt die Stange 36 den Arm 28 und damit auch die Zugmittelscheibe 26 entgegen dem Uhrzeigerdrehsinn. Bei einem weiteren Heruntertreten wird die Rückwärtsfahrgeschwindigkeit vergrößert. Die Verbindungsstange 60 wird wieder nach vorne gezogen und die Sperrklinke 62 im Uhrzeigerdrehsinn verschwenkt. Allerdings ist für die Rückwärtsfahrt der Schwenkbereich der Sperrklinke im Uhrzeigerdrehsinn durch die Stellung des Schwenkarms 52 begrenzt und damit auch der Bewegungsbereich des Armes 28. Durch diese Begrenzung der Bewegungsbereiche kann rückwärts nicht so schnell wie vorwärts gefahren werden. Bei dem bevorzugten Ausführungsbeispiel kann rückwärts nur halb so schnell wie vorwärts gefahren werden. In seiner Stellung für Rückwärtsfahrt kommt darüber hinaus der Schwenkarm 52 noch gegen einen am Rahmen 12 vorgesehenen Anschlag 96 zur Anlage, der verhindert, daß der Schwenkarm 52 weiter entgegen dem Uhrzeigerdrehsinn verschwenkt werden kann, sollte die Bedienungsperson auch mit einer noch so großen Kraft auf das Pedal 20 treten. Solange das Pedal 20 sich nicht in seiner Ausgangsstellung befindet, also verschwenkt ist, kann der Schalthebel 24 nicht aus seiner Stellung für Rückwärtsfahrt in seine Stellung für Vorwärtsfahrt verstellt werden. Eine einen Schaltvorgang auslösende Bewegung des Schalthebels 24 ist durch die Lage des Sperrhebels 62 blockiert.

Sobald die Bedienungsperson ihren Fuß von dem Pedal 20 zurücknimmt, um die Fahrgeschwindkigkeit zu verringern oder um das Fahrzeug anzuhalten, wird die Stange 36 durch die Kraft der Feder 38 nach rückwärts verstellt und damit der Arm 28 im Uhrzeigerdrehsinn, wodurch das Zugmittel 30 letztlich in einen ungespannten Zustand und das Endgetriebe zum Stillstand gerät. Sobald der Arm 28 im Uhrzeigerdrehsinn verschwenkt, wird die Verbindungsstange 60 nach rückwärts verstellt und die Sperrklinke 62 entgegen dem Uhrzeigerdrehsinn. In der in Fig. 4 dargestellten Endstellung ist die Sperrklinke 62 nicht mehr in der Lage, die Schwenkbewegung des Schwenkarms 52 zu behindern. Aus Vorstehendem folgt, daß der Schalthebel 24 nur einen Schaltvorgang zwischen vorwärts und rückwärts auslösen kann, wenn sich das Pedal 20 in seiner Ausgangs- oder Ruhestellung befindet.

In Fig. 4 ist das Pedal 20 in seiner Ausgangs- oder Ruhestellung und der Schalthebel 24 in seiner Stellung für Vorwärtsfahrt dargestellt. In dieser Stellung des Pedals 20 befindet sich der Arm 28 und damit auch die Zugmittelscheibe in der äußersten im Uhrzeigerdrehsinn verschwenkten Endstellung, in der die Zugmittelscheibe 26 das Zugmittel 30 nicht mehr zu spannen vermag. Die Laufräder 15 werden nicht angetrieben. Die Sperrklinke 62 nimmt ihre äußerste entgegen dem Uhrzeigerdrehsinn verschwenkte Stellung ein, in der der Schwenkarm zwischen seinen Stellungen für Vorwärts- oder Rückwärtsfahrt verstellt werden kann. Nur in dieser Stellung der Sperrklinke 62 ist eine Schaltung möglich.

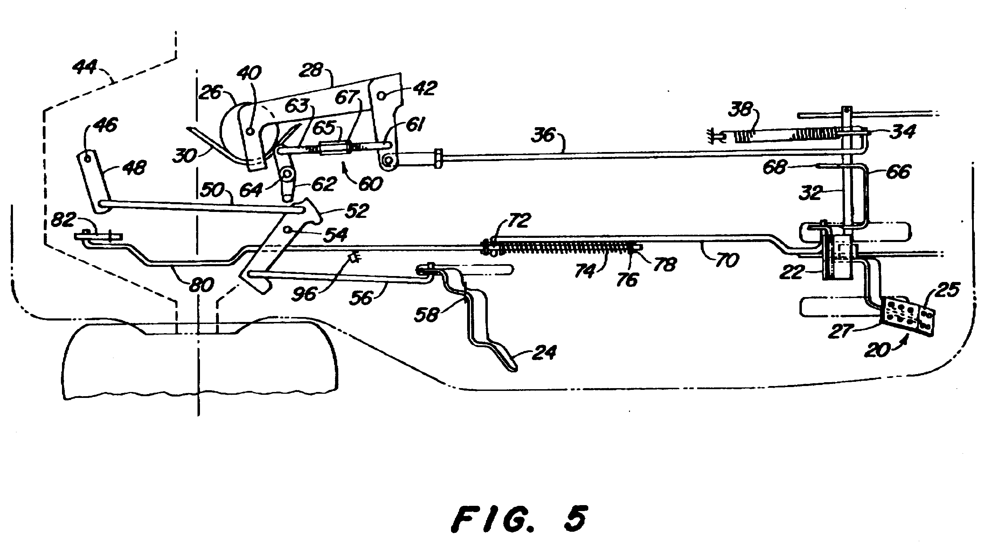

Fig. 5 zeigt den Schalthebel 24 in seiner Stellung für Vorwärtsfahrt und die Zugmittelscheibe 26 in einer entgegen dem Uhrzeigerdrehsinn verschwenkten und das Zugmittel 30 spannenden Position. Antriebsleistung wird dann von dem Motor über das Zugmittelgetriebe und das Endgetriebe auf die Laufräder 15 übertragen. Das Fahrzeug fährt vorwärts, und die Verbindungsstange 60 befindet sich in einer nach vorne gezogenen und die Sperrklinke 62 in einer im Uhrzeigerdrehsinn verschwenkten Position. Auch in dieser Stellung verhindert die Sperrklinke 62 ein Schalten des Fahrzeuges in eine Stellung für Rückwärtsfahrt.

Fig. 6 zeigt den Schalthebel 24 in seiner Position für Rückwärtsfahrt, die Zugmittelscheibe 26 in einer entgegen dem Uhrzeigerdrehsinn verschwenkten, das Zugmittel 30 spannenden extremen Endposition und das Pedal 20 in einem heruntergetretenen Zustand. Der Schwenkarm 52 liegt mit seinem einen Ende gegen den Anschlag 96 an und hat über die Schaltstange 50 den Richtungsarm 48 mit der Schaltwelle 46 im Uhrzeigerdrehsinn in die Getriebestellung für Rückwärtsfahrt verstellt. Die Sperrklinke 62 liegt gegen das andere Ende des Schwenkarmes 52 an und wird durch den Schwenkarm 52 an einer weiteren Drehbewegung im Uhrzeigerdrehsinn gehindert. Damit kann auch der Arm 28 mit der Zugmittelscheibe 26 nicht noch weiter aus seiner Stellung in Fig. 6 entgegen dem Uhrzeigerdrehsinn verschwenken, was eine weitere Geschwindigkeitserhöhung zur Folge hätte. Die Fahrgeschwindigkeit ist damit bei Rückwärtsfahrt begrenzt.

In den Fig. 7 und 8 ist das Pedal 20 für die Fahrzeugbeschleunigung in Seitenansicht dargestellt. Das Pedal hat eine winklige Form mit Pedalflächen 25 und 27. Wenn die Bedienungsperson das Fahrzeug fortbewegen will, beginnt sie zunächst damit, das Pedal 20 herunterzutreten. Hierbei hat der Zehenbereich oder der Fußballen Kontakt mit der oberen Pedalfläche 25. Wenn das Pedal 20 weiter heruntergetreten wird, wird es auf einem Kreisbogen bewegt, wobei der mittlere oder untere Fußbereich mit der unteren Pedalfläche 27 in Kontakt kommt. Da die untere Pedalfläche 27 mit der oberen Pedalfläche 25 einen Winkel bildet, wird das Fußgelenk der Bedienungsperson den Fuß in einem Bogen beim Heruntertreten des Pedals drehen, der kleiner ist als bei einer flachen Pedalfläche. Der Winkel in der Pedalfläche erlaubt daher, daß der Fuß der Bedienungsperson einen bequemeren Winkel mit Bezeug auf den Unterschenkel während des gesamten Schwenkbereichs des Pedals 20 einnimmt, ohne daß die Bedienungsperson ihre Ferse von dem Boden des Bedienungsstandes abheben müßte.

Wenn das Fahrzeug vollständig zum Stillstand gekommen ist, kann auf Wunsch die Parkbremse eingelegt werden. Hierzu muß die Bedienungsperson das Pedal 22 für die Fahrzeugbremsung ganz heruntertreten, wodurch die Bremsstange 70 aus ihrer Position in Fig. 2 in ihre Stellung nach Fig. 3 nach vorne verstellt wird. Danach kann der Parkbremshebel 84 aus dem oberen Teil des umgekehrt J-förmig ausgebildeten Schlitzes 86 in dessen unteren Teil bewegt werden. In dieser Stellung (Fig. 3) greift der Parkbremshebel 84 hinter den hochstehenden Teil 72 der Bremsstange 70, wodurch das Pedal 22 in seiner heruntergetretenen Stellung und die Bremsstangen 70 und 80 in ihren nach vorne gezogenen Stellungen gehalten werden. Ohne Rückführung des Parkbremshebels 84 in seine Ausgangsstellung kann dann die Fahrzeugbremse nicht mehr gelöst werden.

Aus den Fig. 7 und 8 ist ferner noch ersichtlich, daß, wenn das Pedal 22 vollständig heruntergetreten ist, der an dem U-förmigen Teil 66 vorgesehene Nocken 68 ebenfalls im Uhrzeigerdrehsinn mitverschwenkt wurde. Dadurch konnte die Stoppstange 90 unter der Wirkung der Feder 94 sich ebenfalls im Uhrzeigerdrehsinn drehen und sich mit ihrem abgesetzten Teil 92 um den Armteil 34 legen. Der Armteil 34 und damit auch das Pedal 20 können dann nicht mehr aus ihrer Ausgangs- oder Ruhestellung im Uhrzeigerdrehsinn verschwenkt werden. Ein ungewolltes Heruntertreten des Pedals 20 und somit eine Fortbewegung des Fahrzeuges ist daher bei eingelegter Parkbremse ausgeschlossen.

Im Rahmen der Erfindung können auch andere Antriebsmittel als ein Zugmittelgetriebe Verwendung finden, wie beispielsweise hydrostatische Getriebe.

## Patentansprüche

1. Kraftfahrzeug (10), insbesondere Kleinschlepper, mit einer Bremse, deren Gestänge zur Verstellung ein erstes Bedienungselement (Pedal 22) aufweist und in einer Parkstellung feststellbar ist, und einem mindestens ein Laufrad (14, 15) antreibbaren Endgetriebe (44), dessen Ausgangsdrehzahl bei einer Verstellung eines zweiten an Beschleunigungsteile angeschlossenen Bedienungselementes (Pedal 20) von Null auf eine Maximaldrehzahl variierbar ist, wobei bei in der Parkstellung festgestellter Bremse das Endgetriebe (44) die Drehzahl Null aufweist, gekennzeichnet, durch einen zusammen mit dem Bremsgestänge verstellbaren Nocken (68) und einer gegen den Nocken (68) anliegenden Stoppstange (90), die die Beschleunigungsteile in ihrer Stellung für die Ausgangsdrehzahl Null bei in der Parkstellung festgestelltem Bremsgestänge gegen eine Verstellung blokkiert.

2. Kraftfahrzeug nach Anspruch 1, gekennzeichnet durch einen zusammen mit den Beschleunigungsteilen verstellbaren Armteil (34) um den sich bei sich in ihrer Ausgangsdrehzahl Null befindlichen Beschleunigungsteilen und bei in der Parkstellung festgestelltem Bremsgestänge die Stoppstange (90) legt.

3. Kraftfahrzeug nach Anspruch 2, dadurch gekennzeichnet, daß die Stoppstange (90) drehbar gelagert und mit einem gegenüber ihrer Drehachse abgesetzten Teil (92) versehen ist, der unter der Wirkung einer Feder (94) gegen den Nocken (68) anliegt und bei in der Parkstellung festgestelltem Bremsgestänge den Armteil (34) umgreift.

4. Kraftfahrzeug nach einem oder mehreren der vorherigen Ansprüche, wobei das Bremsgestänge ein Bremspedal (22) und die Beschleunigungsteile ein Beschleunigungspedal (20) aufweisen, das mit einer drehbar gelagerten Welle (32) fest verbunden ist, die den mit dem Endgetriebe (44) über ein Gestänge verbundenen Armteil (34) aufweist, dadurch gekennzeichnet, daß der Nocken (68) mit dem Bremspedal (22) verbunden und mit diesem verschwenkbar ist.

5. Kraftfahrzeug nach Anspruch 4, dadurch gekennzeichnet, daß das Bremspedal (22) mit einem U-förmigen Teil (66) versehen ist, der auf der Welle (32) gelagert ist und dessen eines Ende den Nocken (68) aufweist.

## Claims

1. A vehicle (10), in particular a compact tractor, with a brake, the linkage of which has a first operating member (pedal 22) for actuation and may be fixed in parking mode, and a transmission (44) driving at least one running wheel (14, 15), its initial torque being variable from zero to a maximum rotational speed when a second operating member (pedal 20) coupled to accelerating members is actuated, wherein when the brake is fixed in the parking mode, the rotational speed of the transmission (44) is zero, characterised by a cam (68), which may be actuated together with the brake linkage and a stop rod (90), which abuts against the cam (68) and blocks the accelerating members against actuation when in their position for the initial rotational speed of zero and when the brake linkage is fixed in parking mode.

2. Vehicle according to Claim 1, characterised by an arm member (34), which may be actuated together with the brake linkage and around which the stop rod (90) engages when the accelerating members are at their initial speed of zero and when the brake linkage is fixed in its parking mode.

3. Vehicle according to Claim 2, characterised in that the stop rod (90) is rotatably mounted and is provided with a part (92), which is offset in relation to its rotational axis, abuts against the cam (68) under the action of a spring (94) and engages around the arm member (34) when the brake linkage is fixed in parking mode.

4. Vehicle according to one or several of the preceding claims, wherein the brake linkage has a brake pedal (22) and the accelerating members have an accelerator pedal (20) fixed to a rotatably mounted shaft (32), which has the arm member (34) connected to the transmission (44) via a linkage, characterised in that the cam (68) is connected to the brake pedal (22) and may be swivelled with it.

5. Vehicle according to Claim 4, characterised in that the brake pedal (22) is provided with a U-shaped portion (66), which is mounted on the shaft (32) and has the cam (68) at one end.

## Revendications

1. Véhicule automobile (10), notamment petit tracteur, comportant un frein, dont la tringlerie possède, pour son déplacement, un premier élément de commande (pédale 22) et peut être bloqué dans une position de parcage, et une transmission d'extrémité (34) entraînant au moins une roue de roulement (14,15) et dont la vitesse de rotation de sortie peut être modifiée de zéro jusqu'à une vitesse de rotation maximale, lors d'un déplacement d'un second élément de commande (pédale 20) raccordé aux éléments d'accélération, et dans lequel, lorsque le frein est bloqué dans la position de parcage, la transmission d'extrémité (44) possède la vitesse de rotation nulle, caractérisé par une came (68) qui est déplaçable conjointement avec la tringlerie de frein, et par une barre d'arrêt (90) qui s'applique contre la came (68) et qui bloque contre tout déplacement les éléments d'accélération, dans leur position, pour la vitesse de rotation de sortie nulle, lorsque la tringlerie de frein est bloquée dans la position de parcage.

2. Véhicule automobile selon la revendication 1, caractérisé par un élément formant bras (34), qui est déplaçable conjointement avec les éléments d'accélération et autour duquel. la barre de blocage (90) s'applique lorsque les éléments d'accélération ont une vitesse de rotation de sortie nulle et dans le cas où la tringlerie de frein est bloquée dans la position de parcage.

3. Véhicule automobile selon la revendication 2, caractérisé en ce que la barre de blocage (90) est montée de manière à pouvoir pivoter et est équipée d'une partie (92), qui est étagée par rapport à l'axe de rotation de la barre et qui s'applique contre la came (68) sous l'action d'un ressort (94) et s'engage autour de l'élément formant bras (34), lorsque la tringlerie de frein est bloquée dans la position de parcage.

4. Véhicule automobile selon une ou plusieurs des revendications précédentes, dans lequel la tringlerie de frein comporte une pédale de frein (22), et les éléments d'accélération comportent une pédale d'accélération (20), qui est reliée de façon fixe à un arbre monté rotatif (32) qui possède l'élément formant bras (34), qui est relié à la transmission d'extrémité (44) par l'intermédiaire d'une tringlerie, caractérisé en ce que la came (68) est reliée à la pédale de frein (22) et peut pivoter avec cette dernière.

5. Véhicule automobile selon la revendication 4, caractérisé en ce que la pédale de frein (22) est équipée d'une pièce en forme de U (66), qui est montée sur l'arbre (32) et dont une extrémité comporte la came (68).
